# EUROPEAN PATENT SPECIFICATION

(11) **EP 4 432 446 B1**
(45) Date of publication and mention of the grant of the patent: **01.04.2026**
(21) Application number: 23843241.3
(22) Date of filing: 10.07.2023
(51) Int. Cl.: H01M 50/383, H01M 50/211, H01M 50/249, B60L 1/04, H01M 50/367, H01M 50/30

(54) **BATTERY MODULE, AND BATTERY PACK AND VEHICLE INCLUDING THE SAME**
BATTERIEMODUL SOWIE BATTERIEPACKS UND FAHRZEUG DAMIT
MODULE DE BATTERIE, BLOC-BATTERIE ET VÉHICULE COMPRENANT CELUI-CI

(30) Priority: 20.07.2022 KR 20220089573; 19.05.2023 KR 20230065188
(43) Date of publication of application: 18.09.2024
(73) Proprietor: LG Energy Solution, Ltd., Seoul 07335 (KR)
(72) Inventor: HEO, Sam-Hoe, Daejeon 34122 (KR); KIM, Soo-Youl, Daejeon 34122 (KR); SHIN, Jin-Kyu, Daejeon 34122 (KR); JUNG, Ki-Taek, Daejeon 34122 (KR); JUNG, Hye-Mi, Daejeon 34122 (KR)
(74) Representative: Plasseraud IP
(86) International application number: PCT/KR2023/009793
(87) International publication number: WO 2024/019390

(56) References cited:
- CN-U- 216 015 561
- KR-A- 20200 107 213
- KR-A- 20220 021 143
- KR-A- 20220 021 143
- KR-A- 20220 030 545
- KR-B1- 101 679 982
- KR-B1- 101 679 982
- US-A1- 2022 173 476

## Description

### TECHNICAL FIELD

The present application claims priority to Korean Patent Application Nos. 10-2022-0089573 and 10-2023-0065188, respectively filed on July 20, 2022 and May 19, 2023 in the Republic of Korea.

The present disclosure relates to a battery module, and a battery pack and a vehicle including the same, and more particularly, to a battery module having excellent safety against a thermal event, and a battery pack and a vehicle including the battery module.

### BACKGROUND ART

As technology development and demand for various mobile devices, electric vehicles, and energy storage systems (ESSs) increase significantly, interest in and demand for secondary batteries as energy sources are rapidly increasing. Nickel cadmium batteries or nickel hydride batteries have been widely used as conventional secondary batteries, but recently, lithium secondary batteries, which have almost no memory effect compared to nickel-based secondary batteries and thus have advantages of free charge/discharge, very low self-discharge rate, and high energy density, have been widely used.

A lithium secondary battery mainly uses a lithium-based oxide and a carbon material as a positive electrode active material and a negative electrode active material, respectively. A lithium secondary battery includes an electrode assembly in which a positive electrode plate and a negative electrode plate coated with a positive electrode active material and a negative electrode active material are located with a separator therebetween, and a casing in which the electrode assembly is air-tightly accommodated together with an electrolyte, that is, a battery case.

**In** general, according to a shape of a casing, secondary batteries may be classified into can-type batteries in which an electrode assembly is received in a metal can, and pouch-type batteries in which an electrode assembly is received in a pouch of an aluminum laminate sheet.

An operating voltage per lithium secondary battery that has recently been widely used is about 2.5 V to about 4.5 V. Accordingly, an electric vehicle or an ESS requiring high capacity and high power includes a battery module or a battery pack in which a plurality of lithium secondary batteries are connected in series and/or in parallel, and uses the same as an energy source. In particular, in order to satisfy the output power or capacity required for an electric vehicle, a very large number of lithium secondary batteries are included in a battery module or a battery pack.

It is important to design a medium and large-sized battery module or battery pack to prepare against a thermal event.

For example, when thermal runaway intensifies in a battery cell, high-temperature gas and particles (electrodes or active materials detached from an electrode assembly) may be ejected. In this case, the ejected high-temperature gas and particles may cause thermal damage to other battery cells, and thus, heat may rapidly propagate between battery cells in the battery module.

Furthermore, when a large amount of gas is generated due to thermal runaway of a battery cell, internal pressure of a module case may rapidly increase, resulting in collapse or explosion of a battery module. In this case, the fire may spread more rapidly and may become uncontrollable, thereby increasing the risk of secondary damage such as casualty. Hence, it is necessary to design a battery module in case a large amount of gas is generated from battery cells, in order to suppress or delay the above situation.

Document US 2022/173476 discloses a battery module comprising multiple battery sub-packing units, each containing one battery cell housed within a case, wherein the units are installed in a body frame that isolates and surrounds them, with each case featuring a sub vent hole to enable communication between its interior and exterior.

### DISCLOSURE

### Technical Problem

The present disclosure is designed to solve the problems of the related art, and therefore the present disclosure is directed to providing a battery module in which an increase rate in internal pressure may be reduced to prevent rapid collapse or explosion of the battery module when a thermal event occurs in the battery module.

However, technical problems to be solved by the present disclosure are not limited to the above-described technical problems and one of ordinary skill in the art will understand other technical problems from the following description.

### Technical Solution

In one aspect of the present disclosure, there is provided a battery module as defined in the appended claims.

In another aspect of the present disclosure, there is provided a battery pack including the battery module.

In another aspect of the present disclosure, there is provided a vehicle including the battery module.

### Advantageous Effects

According to an aspect of the present disclosure, there may be provided a battery module in which internal pressure may be prevented from rapidly rising when a thermal event occurs in the battery module.

Also, according to the present disclosure, internal pressure of a battery module may be safely and effectively relieved by directionally venting venting gas to the outside of the battery module while slowing an increase rate in pressure.

Furthermore, according to the present disclosure, the collapse or explosion of a battery module in which a thermal event occurs may be prevented, and thus, heat propagation to other battery modules adj acent to the battery module may be prevented or delayed as much as possible.

The present disclosure may have various other effects, which will be described in each embodiment, or descriptions of effects that may be easily inferred by one of ordinary skill in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a combined perspective view illustrating a battery module according to an embodiment of the present disclosure.
FIG. 2 is an exploded perspective view of FIG. 1.
FIG. 3 is a partial perspective view illustrating a state where a battery cell is surrounded by a cell cover in a battery module according to an embodiment of the present disclosure.
FIG. 4 is a perspective view illustrating a state where the battery cell and the cell cover of FIG. 3 are separated from each other.
FIG. 5 is a front view of FIG. 3.
FIG. 6 is an enlarged view illustrating a portion A of FIG. 5.
FIG. 7 is a cross-sectional view taken along line X-X' of FIG. 1.
FIG. 8 is an enlarged view illustrating a portion B of FIG. 7.
FIG. 9 is a view for describing a vehicle including a battery pack including a battery module according to an embodiment of the present disclosure.

### BEST MODE

Hereinafter, preferred embodiments of the present disclosure will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when elements are "coupled" or "connected" to each other, the elements may be directly coupled or connected to each other, or may be indirectly coupled or connected to each other with an intervening element therebetween.

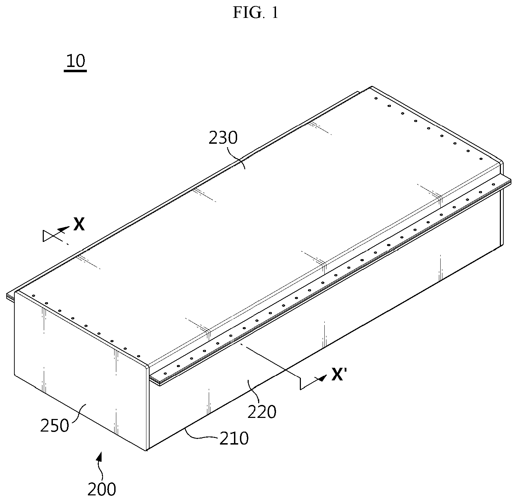

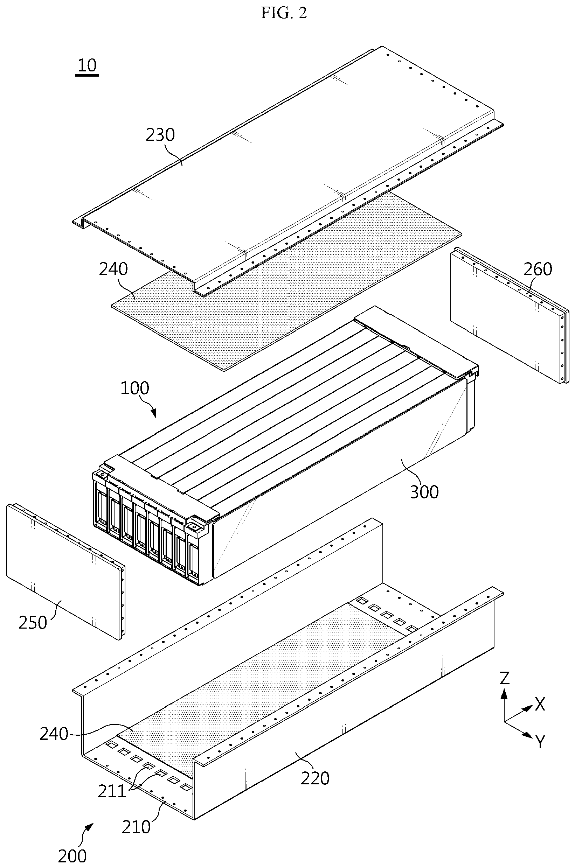

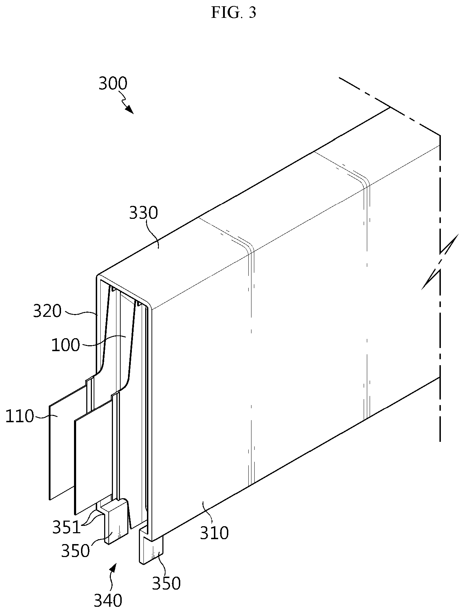

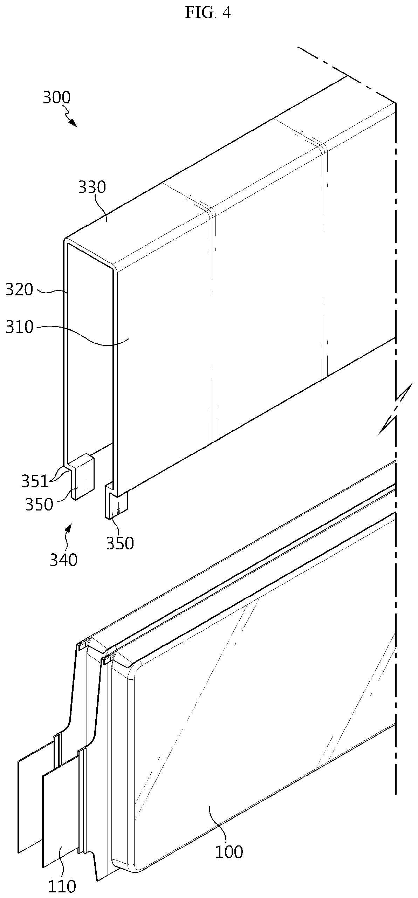

FIG. 1 is a combined perspective view illustrating a battery module according to an embodiment of the present disclosure. FIG. 2 is an exploded perspective view of FIG. 1. FIG. 3 is a partial perspective view illustrating a state where a battery cell is surrounded by a cell cover in a battery module according to an embodiment of the present disclosure. FIG. 4 is a perspective view illustrating a state where the battery cell and the cell cover of FIG. 3 are separated from each other.

Referring to FIGS. 1 to 4, a battery module 10 according to an embodiment of the present disclosure includes a pouch-type battery cell 100, a module case 200, and a cell cover 300.

The battery cell 100 may include an electrode assembly, an electrolyte, and a pouch casing. That is, the battery cell 100 corresponds to a basic unit for charging and discharging, and may be manufactured by accommodating an electrode assembly and an electrolyte material in a soft metal case and sealing the metal case. In this case, the electrode assembly may be manufactured by locating a separator between a positive electrode and a negative electrode.

Also, electrode leads 110 electrically connected to the electrode assembly may be provided at a front end and a rear end of the battery cell 100. The battery cell 100 may be a pouch-type battery cell. A plurality of pouch-type battery cells 100 may be included in the battery module 10. The plurality of pouch-type battery cells 100 may be stacked in at least one direction.

Referring to FIG. 2, an empty space is formed in the module case 200, and the plurality of pouch-type battery cells 100 are accommodated in the inner space. The pouch-type battery cell 100 may be directly seated on the module case 200.

Furthermore, a venting hole 211 through which high-temperature gas and particles are discharged when a thermal event occurs may be formed in the module case 200. A flame may also be guided in a pre-set direction, for example, in a direction in which other battery modules 10 are not provided, through the venting hole 211 and discharged to the outside. The venting hole 211 may be formed at any of various positions of the module case 200, for example, a bottom surface of the module case 200. However, the present disclosure is not limited thereto.

A thermal interface material (TIM) may be located between the module case 200 and the pouch-type battery cell 100, between the module case 200 and the cell cover 300, or between the pouch-type battery cell 100 and the cell cover 300. The TIM is a material for improving the heat transfer performance of each element between different elements.

The TIM may be thermal resins 240, 400, and a thermal pad may be used when necessary. Accordingly, the cooling performance of the battery module 10 may be further improved.

Referring to FIGS. 1 and 2, the module case 200 may include a lower frame 210, a side frame 220, and an upper cover 230. The module case 200 may be formed of a plastic or metal material. In addition, the module case 200 may include any of various casing materials for the battery module 10 which are known at the time of filing the present application. The module case 200 may be formed in a box shape.

The plurality of battery cells 100 are seated on the lower frame 210. The venting hole 211 may be formed in the lower frame 210. The venting hole 211 may be formed in any of various shapes. Although the venting hole 211 may have a quadrangular shape as shown in FIG. 2, in particular, a square shape, the present disclosure is not limited thereto. Also, a plurality of venting holes 211 may be formed, and may be linearly arranged to be spaced apart from each other by a pre-set interval. The side frame 220 extends upward from an edge of the lower frame 210. The upper cover 230 is coupled to the side frame 220, to cover the side frame 220 and the lower frame 210.

Referring to FIGS. 3 and 4, the cell cover 300 may at least partially surround at least some of the plurality of pouch-type battery cells 100. That is, the cell cover 300 may partially surround the pouch-type battery cell 100 so that at least a side of the pouch-type battery cell 100 surrounded by the cell cover 300 is exposed to the outside. Due to this exposure structure, cooling may be facilitated and gas and particles may be easily discharged. At least a portion of the cell cover 300 is inserted into the venting hole 211, which will be described below in detail.

Referring to FIG. 2, the cell cover 300 configured to surround at least some of the plurality of pouch-type battery cells 100 may be accommodated in the inner space of the module case 200.

The cell cover 300 may be configured to surround a various number of pouch-type battery cells 100 together. For example, as shown in FIGS. 3 and 4, one cell cover 300 may be configured to surround two pouch-type battery cells 100 together. Alternatively, one cell cover 300 may be configured to surround one pouch-type battery cell 100. Alternatively, one cell cover 300 may be configured to surround three or more pouch-type battery cells 100 together.

The cell cover 300 may support at least one pouch-type battery cell 100 in an upright state. In general, it is not easy to stack the pouch-type battery cells 100 in a vertical direction. However, in the battery module 10 according to an embodiment of the present disclosure, the cell cover 300 may be configured to surround one or more pouch-type battery cells 100 and maintain the surrounded battery cells 100 in an upright state, that is, an erected state.

Also, the cell cover 300 may be integrally formed. In this case, the cell cover 300 may be formed by bending a metal plate having a plate structure. That is, the cell cover 300 may be formed by bending one plate.

The cell cover 300 may be formed of a material including stainless steel (SUS), which has easy processability, high corrosion resistance, and excellent mechanical strength or rigidity. However, the present disclosure is not limited thereto, and the cell cover 300 may be formed of any of various materials other than SUS to ensure rigidity. In particular, the cell cover 300 may be formed of a metal material. For example, the cell cover 300 may be formed of a chromium (Cr)-based metal material. When the cell cover 300 is formed of a metal material, the cell cover 300 may more stably maintain a state in which the battery cells 100 are stacked and more safely protect the battery cells 100 from external impact. Also, when the cell cover 300 is formed of a steel material such as SUS as described above, the overall structure may be stably maintained when a flame is generated from the battery cell 100 due to a high melting point. In particular, because a steel material has a higher melting point than an aluminum material, the cell cover 300 may not be melted by the flame ejected from the battery cell 100 and a shape of the cell cover 300 may be stably maintained. Accordingly, the effect of preventing or delaying flame propagation between the battery cells 100, a venting control effect, and the like may be excellent.

The cell cover 300 may include an insulating coating layer (not shown) on an inner surface thereof. The insulating coating layer (not shown) may be obtained by coating, applying, or attaching any one insulating material such as silicone resin, polyamide, or rubber. According to the insulating coating layer of the cell cover 300 according to the present embodiment, the insulating coating effect may be maximized with a minimum amount of coating. Also, because the insulating coating layer (not shown) is applied to the inner surface of the cell cover 300, insulation between the battery cell 100 and the cell cover 300 may be enhanced.

The cell cover 300 may be configured so that at least a side of the surrounded pouch-type battery cell 100 is exposed toward a bottom surface of the battery module 10. However, the present disclosure is not limited thereto. In this case, because the bottom of the pouch-type battery cell 100 may directly contact the lower frame 210 of the module case 200, and heat emitted from each pouch-type battery cell 100 is directly transferred to the module case 200, the cooling performance of the battery cell 100 may be improved. Due to the above structure, that is, the structure in which the pouch-type battery cell 100 directly contacts the lower frame 210 of the module case 200, sufficient cooling performance may be expected even without a separate cooling structure between the pouch-type battery cell 100 and the module case 200.

Referring to FIGS. 3 and 4, the cell cover 300 may include a first cover portion 310, a second cover portion 320, and a third cover portion 330. End covers 250, 260 (see FIG. 2) may be provided on front and rear sides of the cell cover 130.

The first cover portion 310 may be configured to cover one side surface of at least one of the plurality of battery cells 100. The first cover portion 310 may extend downward from one end of the third cover portion 330. For example, with reference to FIG. 3, the first cover portion 310 may extend long downward from a right end of the third cover portion 330. The first cover portion 310 may surround a wide surface of the battery cell 100 accommodated therein.

The second cover portion 320 may be configured to cover the other side surface of at least one of the plurality of battery cells 100. The second cover portion 320 may be horizontally spaced apart from the first cover portion 310. The second cover portion 320 may extend downward from the other end of the third cover portion 330. For example, with reference to FIG. 3, the second cover portion 320 may extend long downward from a left end of the third cover portion 330. The second cover portion 320 may surround a wide surface of the battery cell 100 accommodated therein.

The third cover portion 330 connects the first cover portion 310 to the second cover portion 320 and covers an upper end portion of at least one battery cell 100.

The cell cover 300 partially surrounds the battery cell 100 to form an opening 340 through which at least one side of the surrounded battery cell 100 is exposed toward the module case 200. According to this configuration, the cooling efficiency of the battery module 10 may be further improved. **In** particular, in an embodiment of the present disclosure, because a part of each battery cell 100 may be directly exposed to the module case 200 through the opening 340, heat of each battery cell 100 may be effectively discharged to the outside through the module case 200.

To this end, the opening 340 may be formed to face the module case 200 between an end opposite to an end of the first cover portion 310 connected to the third cover portion 330 from among ends of the first cover portion 310 and an end opposite to an end of the second cover portion 320 connected to the third cover portion 330 from among ends of the second cover portion 320.

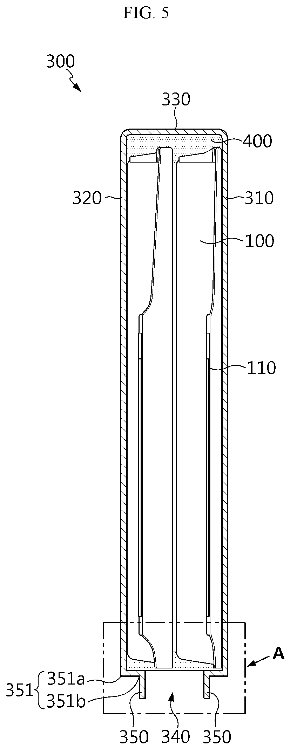

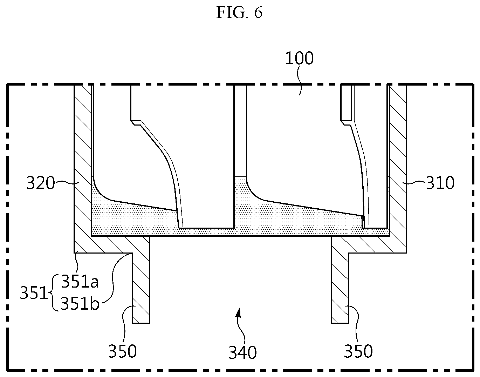

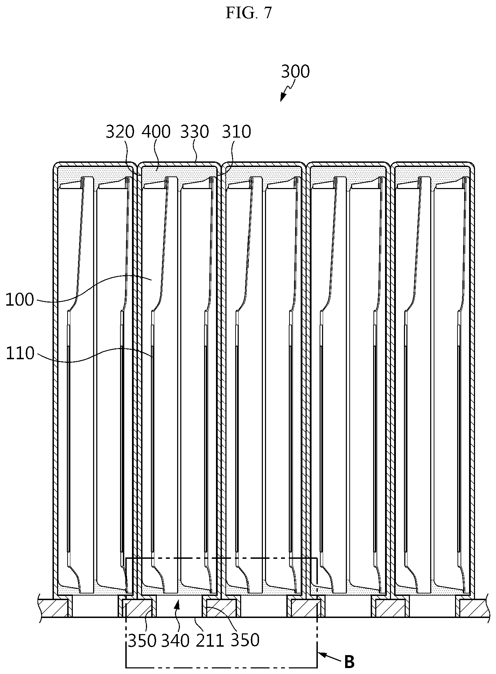

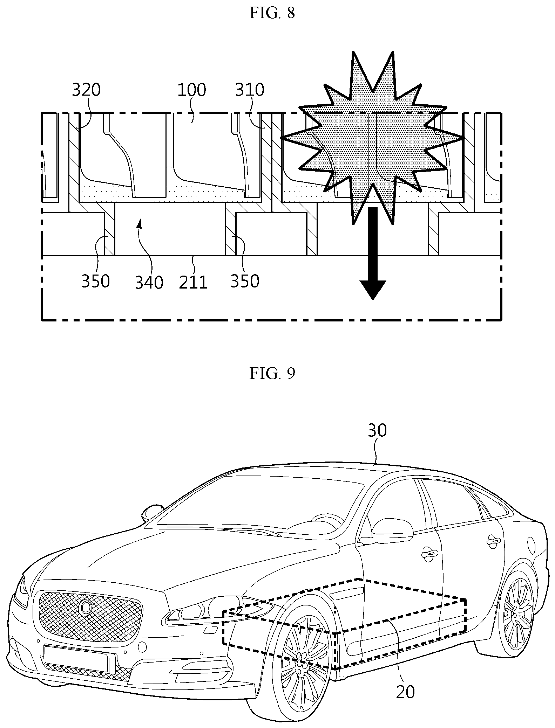

FIG. 5 is a front view of FIG. 3. FIG. 6 is an enlarged view illustrating a portion A of FIG. 5. FIG. 7 is a cross-sectional view taken along line X-X' of FIG. 1. FIG. 8 is an enlarged view illustrating a portion B of FIG. 7.

Referring to FIGS. 7 and 8, the opening 340 may communicate with the venting hole 211. Accordingly, gas or particles may move through the opening 340 and be discharged to the outside through the venting hole 211 in a direction marked by an arrow of FIG. 8.

Referring to FIGS. 3 to 6, a protrusion 350 may be formed at a part of each of a lower end of the first cover portion 310 and a lower end of the second cover portion 320. That is, referring to FIG. 5, the protrusion 350 may be integrally formed by extending downward from the lower end of the first cover portion 310 or the lower end of the second cover portion 320. However, the present disclosure is not limited thereto, and the protrusion 350 may be separately manufactured and then may be coupled to the first cover portion 310 or the second cover portion 320 through welding or the like. Also, a coupling method of the protrusion 350 is not limited to welding.

Referring to FIGS. 7 and 8, the protrusion 350 of the lower end of the first cover portion 310 and the protrusion 350 of the lower end of the second cover portion 320 are inserted into the venting hole 211. As such, when the protrusion 350 of the first cover portion 310 and the protrusion 350 of the second cover portion 320 are inserted into the venting hole 211, high-temperature gas or particles may be guided to be discharged to the outside through the venting hole 211.

That is, because a space between the cell cover 300 and the venting hole 211 is completely blocked by the protrusion 350 not to form a gap, high-temperature gas or particles may be discharged in a pre-set direction without leaking out in another direction (when high-temperature gas or particles leak out in another direction, the high-temperature gas or particles may propagate to neighboring battery modules to cause heat transfer), and thus, even when a thermal event occurs in any one battery module, heat propagation to other neighboring battery modules may be prevented or delayed as much as possible.

Referring to FIGS. 5 and 6, in an embodiment, a bent portion 351 may be formed on the protrusion 350. That is, the bent protrusion 350 may be formed on at least one of the lower end of the first cover portion 310 and the lower end of the second cover portion 320. The bent portion 351 may be formed by being bent once inward from the lower end of the first cover portion 310 or the lower end of the second cover portion 320 (see 351a), and then bent once more downward (see 351b). However, the present disclosure is not limited thereto. Because the bent portion 351 is bent twice, the protrusion 350 may be accurately inserted into the venting hole 211.

According to the embodiments of the present disclosure, when a thermal event occurs in the battery module 10, an increase in internal pressure may be delayed. Also, because gas is directionally vented to the outside of the battery module 10, internal pressure of the battery module 10 may be safely and effectively relieved. Furthermore, when a battery pack 20 is configured by using the battery module 10 according to an embodiment of the present disclosure, even when a thermal event occurs, the battery module 10 may be prevented from exploding due to a rapid increase in pressure, thereby preventing or delaying thermal damage propagation to other neighboring battery modules 10 as much as possible.

When necessary, at least one of the lower end of the first cover portion 310 and the lower end of the second cover portion 320 may extend to the outside of the venting hole 211. As such, when the lower end of the first cover portion 310 and the lower end of the second cover portion 320 extends to the outside of the venting hole 211, a movement path of gas may be accurately guided in a pre-set direction.

At least some of the plurality of pouch-type battery cells 100 may be adhered and fixed to inner surfaces of the first cover portion 310 and the second cover portion 320. A member for adhesion may be thermally conductive. Through the adhesion, the cell cover 300 may be firmly coupled to the battery cell 100, and may help discharge heat generated in the battery cell 100 to the outside of the battery cell 100.

An inner space may be limited by the first cover portion 310, the second cover portion 320, and the third cover portion 330 of the cell cover 300. One or more battery cells 100 may be accommodated in the limited inner space of the cell cover 300.

The cell cover 300 may be provided in an 'n' shape, a 'u' shape, or a '⊏' shape surrounding three surfaces of at least one battery cell 100. Referring to FIG. 2, the cell cover 300 may be configured so that the plurality of battery cells 100 are horizontally stacked while being erected in a vertical direction.

For example, referring to FIG. 2, each cell cover 300 may surround one or more battery cells 100, and the plurality of battery cells 100 surrounded by each cell cover 300 may be stacked in a Y-axis direction of FIG. 2. In this case, due to the cell cover 300, a structure in which the plurality of battery cells 100 are stacked side by side in the Y-axis direction while being erected may be stably maintained.

Also, because the cell cover 300 surrounds three surfaces of at least one battery cell 100, a bus bar or a terminal of each unit may be easily located on a side surface not surrounded by each cell cover 300. The battery cell 100 such as the pouch-type battery cell 100 may be formed in a substantially hexahedral shape. The electrode leads 110, that is, a negative electrode lead and a positive electrode lead may be respectively formed on two of six surfaces. The cell cover 300 is provided to surround at least parts of three of the four surfaces of the battery cell 10 having the six surfaces excluding the two surfaces on which the electrode leads 110 are formed.

In a modified embodiment, the module case 200 of the battery module 10 may be removed, and the battery cell 100 may be directly accommodated in a pack case of the battery pack 20. According to this structure, because the battery cell 100 may be further accommodated in a space occupied by the module case 200 of the battery module 10 in the battery pack 20, space efficiency may be improved and battery capacity may be improved. That is, in the modified embodiment, the module case 200 of the battery module 10 may not be included.

FIG. 9 is a view for describing a vehicle including a battery pack including a battery module according to an embodiment of the present disclosure.

The battery pack 20 according to an embodiment of the present disclosure may include one or more battery modules 10 according to an embodiment of the present disclosure as described above. Also, the battery pack 20 may further include, in addition to the battery module 10, a housing for accommodating the battery module 10, and various devices for controlling charging/discharging of the battery module 10, for example, a BMS, a current sensor, and a fuse.

A vehicle 30 according to an embodiment of the present disclosure may include one or more battery modules 10 or battery packs 20, and the battery module 10 may be included in the battery pack 20. Although the battery pack 20 is installed in the vehicle 30, the battery module 10 according to an embodiment of the present disclosure may be directly provided in the vehicle 30 when necessary.

The battery module pack 20 or the battery module 10 according to an embodiment of the present disclosure may be applied to the vehicle 30, for example, any vehicle 30 provided to use electricity such as an electric vehicle or a hybrid vehicle.

It will be understood by one of ordinary skill in the art that when terms indicating directions such as upper, lower, left, and right are used, these terms are only for convenience of explanation and may vary according to a position of a target object, a position of an observer, etc.

Although the embodiments of the present disclosure have been illustrated and described above, the present disclosure is not limited to the above-described specific embodiments. Various modified embodiments may be made by one of ordinary skill in the art without departing from the scope of the present disclosure as claimed in the claims.

### INDUSTRIAL APPLICABILITY

The present disclosure relates to a battery module, and a battery pack and a vehicle including the same, and particularly, may be used in industries related to secondary batteries.

## Claims

1. A battery module (10) comprising:
a plurality of pouch-type battery cells (100);
a module case (200) in which the plurality of pouch-type battery cells (100) are accommodated and a venting hole (211) is formed; and
a cell cover (300) at least partially surrounding and supporting at least some of the plurality of pouch-type battery cells (100), in an inner space of the module case (200),
wherein at least a portion of the cell cover (300) is inserted into the venting hole (211);
whereby the cell cover (300) comprises:
a first cover portion (310) covering one side surface of at least one of the plurality of battery cells (100);
a second cover portion (320) covering the other side surface of the at least one of the plurality of battery cells (100); and
a third cover portion (330) connecting the first cover portion (310) to the second cover portion (320) and covering an upper end portion of the at least one battery cell (100),
the battery module being **characterised in that** a protrusion (350) is formed on a part of each of a lower end of the first cover portion (310) and a lower end of the second cover portion (320),
wherein the protrusion (350) is inserted into the venting hole (211).

2. The battery module according to claim 1, wherein the cell cover (300) is configured to support the at least one battery cell (100) in an upright state.

3. The battery module according to claim 1, wherein the cell cover (300) partially surrounds the battery cell (100) to form an opening (340) through which at least one side of the surrounded battery cell (100) is exposed toward the module case (200).

4. The battery module according to claim 3, wherein the opening (340) communicates with the venting hole (211).

5. The battery module according to claim 1, wherein the cell cover (300) is formed by bending one plate.

6. The battery module according to claim 1, wherein a bent portion is formed on the protrusion (350).

7. The battery module according to claim 6, wherein the bent portion is bent once inward from the lower end of the first cover portion (310) or the lower end of the second cover portion (320), and then bent once more downward.

8. The battery module according to claim 1, wherein at least one of the lower end of the first cover portion (310) and the lower end of the second cover portion (320) extends to an outside of the venting hole (211).

9. The battery module according to claim 1, wherein the at least one battery cell (100) is adhered and fixed to inner surfaces of the first cover portion (310) and the second cover portion (320).

10. The battery module according to claim 1, wherein an opening exposed toward the module case (200) is formed between an end opposite to an end of the first cover portion (310) connected to the third cover portion (330) from among ends of the first cover portion (310) and an end opposite to an end of the second cover portion (320) connected to the third cover portion (330) from among ends of the second cover portion (320).

11. The battery module according to claim 1, wherein the cell cover (300) comprises an insulating coating layer on an inner surface thereof.

12. The battery module according to claim 1, wherein the cell cover (300) is integrally formed.

13. A battery pack comprising the battery module according to any one of claims 1 to 12.

14. A vehicle comprising the battery module according to any one of claims 1 to 12.

## Patentansprüche

1. Batteriemodul (10), umfassend:
eine Mehrzahl von Batteriezellen (100) vom Beuteltyp;
ein Modulgehäuse (200), in welchem die Mehrzahl von Batteriezellen (100) vom Beuteltyp untergebracht sind und ein Entlüftungsloch (211) gebildet ist; und
eine Zellenabdeckung (300), welche wenigstens einige aus der Mehrzahl von Batteriezellen (100) vom Beuteltyp in einem inneren Raum des Modulgehäuses (200) wenigstens teilweise umgibt und diese haltert,
wobei wenigstens ein Abschnitt der Zellenabdeckung (300) in das Entlüftungsloch (211) eingeführt ist;
wodurch die Zellenabdeckung (300) umfasst:
einen ersten Abdeckungsabschnitt (310), welcher eine Seitenfläche wenigstens einer aus der Mehrzahl von Batteriezellen (100) abdeckt;
einen zweiten Abdeckungsabschnitt (320), welcher die andere Seitenfläche der wenigstens einen aus der Mehrzahl von Batteriezellen (100) abdeckt; und
einen dritten Abdeckungsabschnitt (330), welcher den ersten Abdeckungsabschnitt (310) mit dem zweiten Abdeckungsabschnitt (320) verbindet und einen oberen Endabschnitt der wenigstens einen Batteriezelle (100) abdeckt,
wobei das Batteriemodul **dadurch gekennzeichnet ist, dass** ein Vorsprung (350) an einem Teil von jedem aus einem unteren Ende des ersten Abdeckungsabschnitts (310) und einem unteren Ende des zweiten Abdeckungsabschnitts (320) gebildet ist,
wobei der Vorsprung (350) in das Entlüftungsloch (211) eingeführt ist.

2. Batteriemodul nach Anspruch 1, wobei die Zellenabdeckung (300) dazu eingerichtet ist, die wenigstens eine Batteriezelle (100) in einem aufrechten Zustand zu haltern.

3. Batteriemodul nach Anspruch 1, wobei die Zellenabdeckung (300) die Batteriezelle (100) teilweise umgibt, um eine Öffnung (340) zu bilden, durch welche wenigstens eine Seite der umgebenen Batteriezelle (100) in Richtung des Modulgehäuses (200) exponiert ist.

4. Batteriemodul nach Anspruch 3, wobei die Öffnung (340) mit dem Entlüftungsloch (211) in Verbindung steht.

5. Batteriemodul nach Anspruch 1, wobei die Zellenabdeckung (300) durch Biegen einer Platte gebildet ist.

6. Batteriemodul nach Anspruch 1, wobei ein gebogener Abschnitt an dem Vorsprung (350) gebildet ist.

7. Batteriemodul nach Anspruch 6, wobei der gebogene Abschnitt von dem unteren Ende des ersten Abdeckungsabschnitts (310) oder dem unteren Ende des zweiten Abdeckungsabschnitts (320) einmal nach innen gebogen ist und daraufhin ein weiteres Mal nach unten gebogen ist.

8. Batteriemodul nach Anspruch 1, wobei sich wenigstens eines aus dem unteren Ende des ersten Abdeckungsabschnitts (310) und dem unteren Ende des zweiten Abdeckungsabschnitts (320) zu einer Außenseite des Entlüftungslochs (211) erstreckt.

9. Batteriemodul nach Anspruch 1, wobei die wenigstens eine Batteriezelle (100) an inneren Flächen des ersten Abdeckungsabschnitts (310) und des zweiten Abdeckungsabschnitts (320) anhaftet und an diese fixiert ist.

10. Batteriemodul nach Anspruch 1, wobei eine Öffnung, welche in Richtung des Modulgehäuses (200) exponiert ist, zwischen einem Ende, welches entgegengesetzt zu einem Ende des ersten Abdeckungsabschnitts (310) ist, welches unter den Enden des ersten Abdeckungsabschnitts (310) mit dem dritten Abdeckungsabschnitt (330) verbunden ist, und einem Ende gebildet ist, welches entgegengesetzt zu einem Ende des zweiten Abdeckungsabschnitts (320) ist, welches unter den Enden des zweiten Abdeckungsabschnitts (320) mit dem dritten Abdeckungsabschnitt (330) verbunden ist.

11. Batteriemodul nach Anspruch 1, wobei die Zellenabdeckung (300) an einer inneren Fläche davon eine isolierende Beschichtung umfasst.

12. Batteriemodul nach Anspruch 1, wobei die Zellenabdeckung (300) integral gebildet ist.

13. Batteriepack, umfassend das Batteriemodul nach einem der Ansprüche 1 bis 12.

14. Fahrzeug, umfassend das Batteriemodul nach einem der Ansprüche 1 bis 12.

## Revendications

1. Module de batterie (10) comprenant :
une pluralité de cellules de batterie de type poche (100);
un boîtier de module (200) dans lequel la pluralité de cellules de batterie de type poche (100) sont logées et un trou d'aération (211) est formé ; et
un couvercle de cellule (300) entourant et supportant au moins partiellement au moins certaines de la pluralité de cellules de batterie de type poche (100), dans un espace intérieur du boîtier de module (200),
dans lequel au moins une partie du couvercle de cellule (300) est insérée dans le trou d'aération (211) ;
dans lequel le couvercle de cellule (300) comprend :
une première partie de couvercle (310) recouvrant une surface latérale d'au moins une parmi la pluralité de cellules de batterie (100) ;
une deuxième partie de couvercle (320) recouvrant l'autre surface latérale d'au moins une parmi la pluralité de cellules de batterie (100) ; et
une troisième partie de couvercle (330) reliant la première partie de couvercle (310) à la deuxième partie de couvercle (320) et recouvrant une partie d'extrémité supérieure de l'au moins une cellule de batterie (100), le module de batterie étant **caractérisé en ce qu'**une saillie (350) est formée sur une partie de chacune d'une extrémité inférieure de la première partie de couvercle (310) et d'une extrémité inférieure de la deuxième partie de couvercle (320),
dans lequel la saillie (350) est insérée dans le trou d'aération (211).

2. Module de batterie selon la revendication 1, dans lequel le couvercle de cellule (300) est conçu pour soutenir l'au moins une cellule de batterie de type poche (100) dans un état vertical.

3. Module de batterie selon la revendication 1, dans lequel le couvercle de cellule (300) entoure partiellement la cellule de batterie de type poche (100) pour former une ouverture (340) à travers laquelle au moins un côté de la cellule de batterie de type poche (100) entourée est exposé vers le boîtier de module (200).

4. Module de batterie selon la revendication 3, dans lequel l'ouverture (340) communique avec le trou d'aération (211).

5. Module de batterie selon la revendication 1, dans lequel le couvercle de cellule (300) est formé par pliage d'une plaque.

6. Module de batterie selon la revendication 1, dans lequel une partie courbée est formée sur la saillie (350).

7. Module de batterie selon la revendication 6, dans lequel la partie courbée est courbée une fois vers l'intérieur à partir de l'extrémité inférieure de la première partie de couvercle (310) ou de l'extrémité inférieure de la deuxième partie de couvercle (320), puis courbée une fois de plus vers le bas.

8. Module de batterie selon la revendication 1, dans lequel au moins l'une de l'extrémité inférieure de la première partie de couvercle (310) et l'extrémité inférieure de la deuxième partie de couvercle (320) s'étend jusqu'à l'extérieur du trou d'aération (211).

9. Module de batterie selon la revendication 1, dans lequel l'au moins une cellule de batterie (100) est collée et fixée sur des surfaces internes de la première partie de couvercle (310) et de la deuxième partie de couvercle (320).

10. Module de batterie selon la revendication 1, dans lequel une ouverture exposée vers le boîtier de module (200) est formée entre une extrémité opposée à une extrémité de la première partie de couvercle (310) reliée à la troisième partie de couvercle (330) à partir des extrémités de la première partie de couvercle (310) et une extrémité opposée à une extrémité de la deuxième partie de couvercle (320) reliée à la troisième partie de couvercle (330) à partir des extrémités de la deuxième partie de couvercle (320).

11. Module de batterie selon la revendication 1, dans lequel le couvercle de cellule (300) comprend une couche de revêtement isolant sur une surface interne de celui-ci.

12. Module de batterie selon la revendication 1, dans lequel le couvercle de cellule (300) est intégralement formé.

13. Bloc-batterie comprenant le module de batterie selon l'une quelconque des revendications 1 à 12.

14. Véhicule comprenant le module de batterie selon l'une quelconque des revendications 1 à 12.
